# EUROPEAN PATENT SPECIFICATION

(11) **EP 3 744 918 B1**
(45) Date of publication and mention of the grant of the patent: **29.10.2025**
(21) Application number: 19176779.7
(22) Date of filing: 27.05.2019
(51) Int. Cl.: E04B 1/84, E04B 1/86, B29B 17/00, B29B 17/04

(54) **SOUND ABSORBING PANEL ASSEMBLY**
SCHALLABSORBIERENDE PANEELANORDNUNG
ENSEMBLE DE PANNEAU D'ABSORPTION SONORE

(43) Date of publication of application: 02.12.2020
(73) Proprietor: Diab International AB, 252 21 Helsingborg (SE)
(72) Inventor: KUZMINSKAS, Kestutis, 76303 SIAULIAI (LT)
(74) Representative: Brann AB

(56) References cited:
- EP-A1- 2 653 280
- EP-A1- 3 438 967
- EP-A2- 0 139 360
- DE-A1- 2 744 382

## Description

### TECHNICAL FIELD

Embodiments herein relate to sound absorbing panel assemblies and sheet assemblies made of polymer foam material and methods for manufacturing such panel and sheet assemblies.

### BACKGROUND

Elimination or at least reduction of noise and other undesirable sounds may involve acoustic shielding of the source of the undesired sound in various ways. For example, the source of the undesired sound itself may be enclosed in a structure that absorbs the undesired sound before it reaches an outer environment which is to be kept more or less silent. In a scenario where the source of the undesired sound is external to, and inaccessible from, the environment that is to be kept more or less silent, the solution may then instead be to enclose the environment that is to be kept more or less silent with a structure that absorbs the undesired sound.

In any such scenario, a typical arrangement used in the prior art is that of sound absorbing panels covering more or less surface area of a ceiling and the walls of a room. A prior art example of an acoustic absorber is disclosed in US patent number 9369805. The acoustic absorber of US 9369805 is made of an open-pored porous material. Absorption layers are arranged in parallel at a distance from each other and connected to each other by means of integral edges or by means of an insulating material filling a space between the layers.

A drawback of prior art acoustic absorbers such as those described in US 9369805 is, for example, that they are unnecessarily complex in construction and thereby do not allow for simple construction of assemblies of acoustic absorbers.

The application EP 0139360 A1 shows an acoustical tile with two parallel porous metal plates and two air chambers.

### SUMMARY

In view of the above, an object of the present disclosure is to overcome drawbacks related to prior art arrangements for reduction of undesired sound. Such an object is achieved in a first aspect by a sound absorbing panel assembly that comprises a first sheet, a second sheet, a first frame structure and a second frame structure. Each sheet comprises a polymer foam material and each sheet is provided with a plurality of backside-to-front side through-going perforations that are arranged in a pattern covering at least a major part of the area of the backside and front side of each sheet. The first frame structure is arranged on the backside of the first sheet and the second frame structure is arranged on the backside of the second sheet. Furthermore, the first sheet and the second sheet are arranged in a sandwich arrangement in relation to each other such that the first frame structure is attached to the front side of the second sheet and an air gap is present between the sheets.

In other words, such a sound absorbing panel assembly comprises elements that are simple in construction and thereby allow for a minimization of cost of manufacturing a large number of assemblies. Another advantage is that such a sound absorbing panel assembly may be produced in any desirable shape, e.g. in the form of a triangle, a square, a hexagon, an octagon etc., depending upon the specific context in which the assembly is to be used. Another advantage is the flexibility that is provided by the fact that it is possible to assemble such a sound absorbing panel assembly "on site", i.e. at the location where it is to be used, e.g. a building site.

Embodiments include those where the first frame structure and the second frame structure comprises said polymer foam material. Such embodiments further accentuate the advantageous effect of simplifying construction of sound absorbing panel assemblies. In various embodiments, the polymer foam material comprises aggregated shreds of polymer foam. For example, such shreds may originate from more or less discarded bits and pieces of polymer foam material that, after shredding into said shreds, become said sheets and frame structures. Such embodiments have an advantageous effect in that it enables a reduction of waste polymer material with the associated advantageous reduction of cost of manufacture.

In a second aspect, which is not forming part of the claimed invention, there is provided sheet assembly for a sound absorbing panel assembly as summarized above. Such a sheet assembly comprises the first sheet and the first frame structure arranged on the backside of the first sheet.

In a third aspect, which is not forming part of the claimed invention, there is provided a method for manufacturing a sheet assembly as summarized above. Such a method for manufacturing comprises obtaining pieces of polymer foam material and shredding the pieces of polymer foam material into shreds of polymer foam material. The shreds of polymer foam material are then mixed with an adhesive into a mixture of shreds of polymer foam material and adhesive. Pressure moulding then takes place of the mixture of shreds of polymer foam material and adhesive into cured blocks of pressure moulded pieces of polymer foam material. The cured blocks of pressure moulded pieces of polymer foam material are then cut into sheets of polymer foam material that are perforated whereby the sheet of polymer foam material obtains a perforation pattern. At least one sheet of polymer foam material is cut into at least one polymer foam frame structure and a polymer foam frame structure is attached to a perforated sheet of polymer foam material into a sheet assembly.

In a fourth aspect there is provided a method for manufacturing a panel assembly as summarized above. Such a method for manufacturing comprises manufacturing a plurality of sheet assemblies as summarized above and then assembling at least a first sheet assembly and a second sheet assembly together into the sound absorbing panel assembly.

Effects and advantages of these further aspects correspond to those summarized above in connection with the first aspect.

### BRIEF DESCRIPTION OF THE DRAWINGS

Figure 1a schematically illustrates an exploded view of a sound absorbing panel assembly,
figure 1b schematically illustrates a backside view of a sound absorbing panel assembly, figures 1c and 1d are schematically illustrated cross-sectional views of the sound absorbing panel assembly of figure 1b,
figure 1e schematically illustrates perforations in a sheet,
figure 1f schematically illustrates a frame structure,
figure 2 schematically illustrates a sheet assembly,
figure 3 is a graph illustrating sound absorption as a function of frequency,
figure 4 is a flowchart of a method for manufacturing a sheet assembly, and
figure 5 is a flowchart of a method for manufacturing a sound absorbing panel assembly.

### DETAILED DESCRIPTION

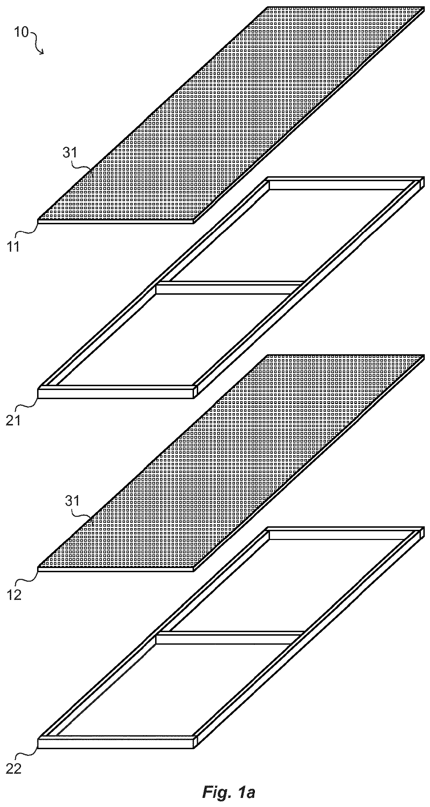

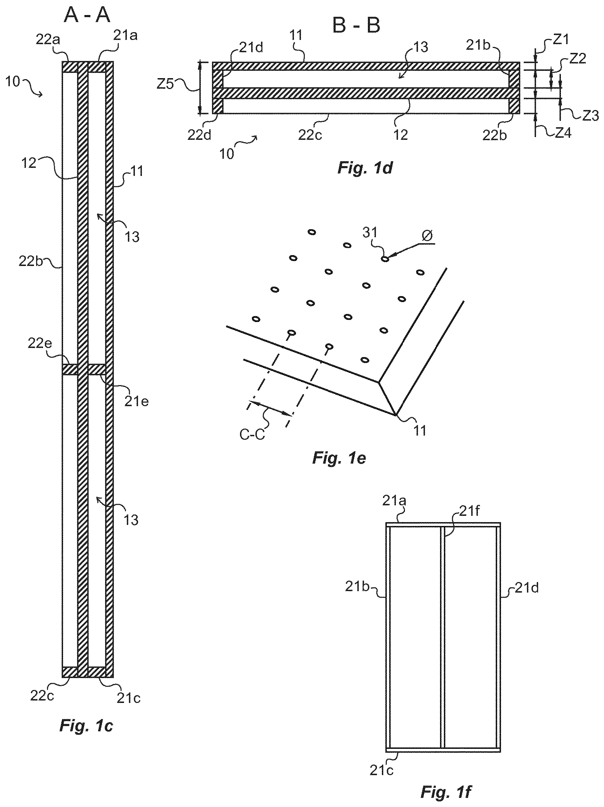

Referring to **figures 1a****-e,** in which same reference numerals refer to same features, embodiments of a sound absorbing panel assembly 10 comprises a first sheet 11 and a second sheet 12, a first frame structure 21 and a second frame structure 22.

Each of the first sheet 11 and the second sheet 12 comprises a polymer foam material.

Each of the first sheet 11 and the second sheet 12 is provided with a plurality of backside-to-front side through-going perforations 31 arranged in a pattern covering at least a major part of the area of the backside and front side of each sheet 11, 12.

The first frame structure 21 is arranged on the backside of the first sheet 11 and the second frame structure 22 is arranged on the backside of the second sheet 12.

The first sheet 11 and the second sheet 12 are arranged in a sandwich arrangement in relation to each other such that the first frame structure 21 is attached to the front side of the second sheet 12 and an air gap 13 is present between the sheets 11, 12.

With regard to any specific selection of polymer foam material, it may be selected from a plurality of materials, including Divinycell^{®} H, Divinycell^{®} HP, Divinycell^{®} HM, Divinycell^{®} Matrix, and similar materials. In fact, a mixture of such materials may also be selected.

In various embodiments, the first frame structure 21 and the second frame structure 22 comprises said polymer foam material. In other words, the frame structures 21, 22 may be made of one and the same polymer foam material as the sheets 11, 12, shredded or in the form of prime pieces of polymer foam cut into appropriate shapes.

In various embodiments, the polymer foam material comprises aggregated shreds of polymer foam. Such shreds may be obtained from a shredding procedure, as will be exemplified below in connection with the description of a manufacturing method. As exemplified, the shreds may have a size in the range 3-20 mm after shredding. It has been found that sizes in the lower part of such an interval provide a more solid or robust structure in mechanical terms, whereas sizes in the upper part of such an interval provide improved acoustic properties, e.g. in terms of sound absorption.

With regard to the sizes of the various elements of the sound absorbing panel assembly 10, in various embodiments the thickness Z1 of the first sheet 11 plus the thickness Z2 of the first frame structure 21 is in the interval 45 mm to 55 mm and, in various embodiments the thickness Z3 of the second sheet 21 plus the thickness Z4 of the second frame structure 22 is in the interval 45 mm to 55 mm. However, in other embodiments, a combined thickness of the sheets 11, 12 and the frame structures 21, 22 may be outside these intervals and only practical considerations specific to the context where the sheets are used limit the selection of the thickness of the sheets 11, 12 and frame structures 21, 22.

As will be discussed further below, a sound absorbing panel assembly having Z1 = 15 mm, Z2 = 35 mm, Z3 = 20 mm and Z4 = 30 mm provides good sound absorption over a large spectral range. Moreover, it is to be noted that a thickness of 50 mm for a combination of one sheet and one frame structure is advantageous in terms of building standards. For example, it has been found that thickness values of 100 mm, 150 mm, 200 mm etc. on are widely used in many solutions for walls, ceilings or floors. Consequently, sound absorbing panel assemblies having a thickness of 50 mm may easily be used in combination with other materials, making a structure of a certain thickness.

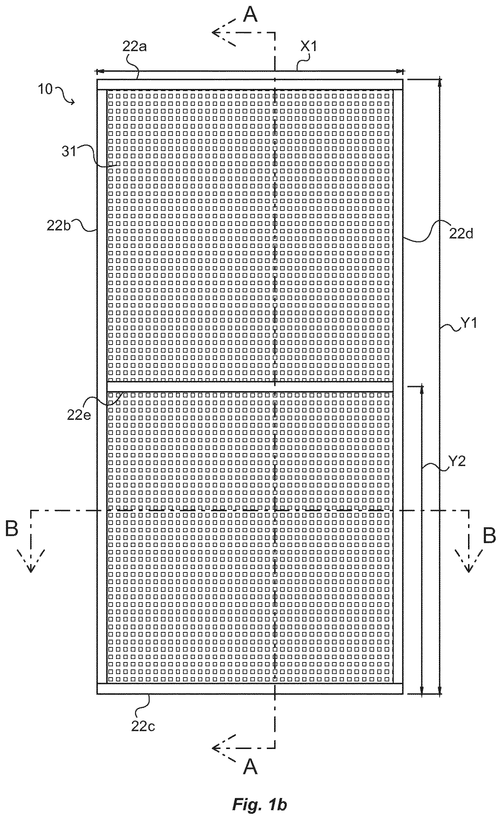

With regard to the perforations 31 in the sheets 11, 12, although figures 1a and 1b exemplify a total area coverage of the sheets 11, 12, it is to be remembered that at least part of the areas of the sheets 11, 12 may be devoid of perforations as long as the perforations 31 are arranged in a pattern covering at least a major part of the area of the backside and front side of each sheet 11, 12. Furthermore, in various embodiments, the perforations 31 may be arranged in a matrix pattern of rows and columns, although other spatial distributions are possible in other embodiments, such as rows and columns at angles that are not perpendicular to each other.

With regard to the distance between the perforations 31 of the sheets 11, 12 and the size of the perforations 31, in various embodiments the distance C-C between adjacent perforations 31 is in any of the intervals: 5-50 mm, 10-30 mm, 15-25 mm and 19-21 mm and in various embodiments the perforations 31 are through-going holes having a diameter ø in any of the intervals 0.5-10 mm, 1-5 mm and 1.5-2.5 mm. However, in other embodiments, the distance C-C and the diameter ø may be outside these intervals. Moreover, although figures 1a, 1b and 1e exemplify the shape of the perforations 31 by squares and circles, it is to be pointed out that the perforations 31 may be of any suitable rounded or polygon shape.

With regard to the outer dimensions of the sheets 11, 12 and the frame structures 21, 22, as exemplified in figures 1a-1d and **figure 1f****,** they have short sides having a dimension X1 and long sides having a dimension Y1. It is to be noted that an advantageous configuration in terms of building standards is X1 = 600 mm and Y1 = 1200 mm. For example, such measures are common with regard to ceiling panels, mineral wool plates, drywall plates etc.

With regard to the frame structures 21, 22, as exemplified in figures 1a-1d, they comprise edge parts 21a-d and 22a-d making up a rectangular shape having a spatial extent that correspond to the outline of the first sheet 11 and the second sheet 12, respectively, and a cross-bar 21e, 22e intersecting respective long sides 21b, 22b, 21d, 22d. Figure 1f illustrates another example where a cross-bar 21f intersects the short sides 21a, 21c. Other embodiments include those where the frame structures 21, 22 are composed of edge parts and cross-bar parts having other configurations, however these other embodiments are not illustrated in the drawings.

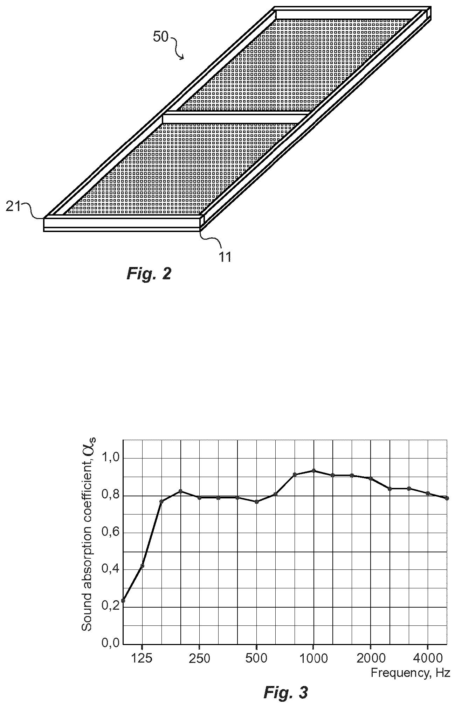

**Figure 2** illustrates a sheet assembly 50 for a sound absorbing panel assembly 10 as described above. The sheet assembly 50 comprises the first sheet 11 and the first frame structure 21 arranged on the backside of the first sheet 11. Various embodiments of the sheet assembly 50 may comprise the same elements as exemplified above in connection with the panel assembly 10.

Turning now to **figure 3****,** results from measuring sound absorption using sound absorbing panel assemblies as described herein will be discussed. With reference to figures 1b and 1d, the specimen panels used in the measuring of the sound absorption have measurements as follows: X1=600mm, Y1=1200mm, Z1=15mm, Z2=35mm, Z3= 20mm and Z4=30mm. The diameter of the perforations in the sheets and the C-C distance between the individual perforations are 2mm and 20mm, respectively. The sound absorption was measured in a 5-angle reverberation room according to EN ISO 354:2004 and sound absorption rating was calculated in accordance with EN ISO 11654:1998. The resulting sound absorption coefficients are plotted in the graph in figure 3 and, as can be appreciated from the graph, the absorption coefficient is essentially constant, having a value of 0.8-0.9, over a large frequency interval starting around 150 Hz and going up to the frequency limit of the test around 4 kHz..

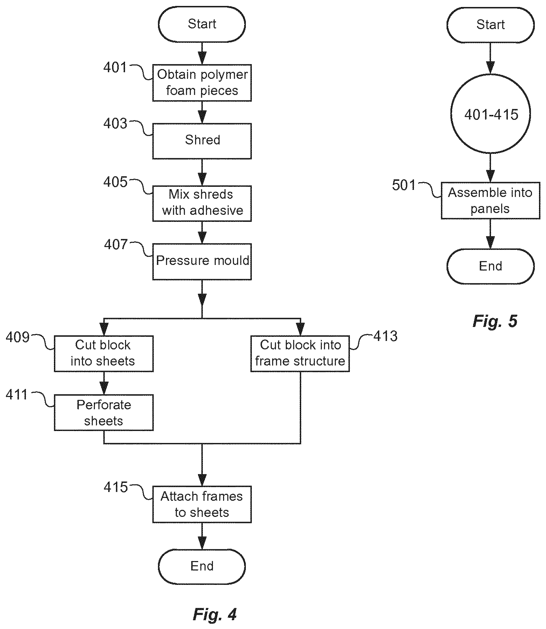

Turning now to **figures 4 and 5****,** a method for manufacturing a sheet assembly 50 and a method for manufacturing a sound absorbing panel assembly 10 will be described in some detail.

The method for manufacturing a sheet assembly commences with a step 401 in which pieces of polymer foam material are obtained. For example, the polymer foam material may be in the form of discarded pieces of polymer foam that may originate from a manufacturing process that is not related to a sound absorption context but from any process where polymer foam is used.

The polymer foam pieces are then shredded 403 in a shredder. For example, the polymer foam pieces may be shredded in a shredder in the form of a rotating cylinder with internal knives. In such a shredder, the knives cut the polymer foam pieces into shreds and the shreds are sifted through a sieve. By an appropriate configuration of knives and sieve, the shreds that are obtained from the shredder are typically in the interval 3-20 mm in size. Moreover, by operating the shredder at an appropriate speed, i.e. appropriate rotational speed, it is possible to avoid overheating the shreds and thereby avoiding generation of acids in the shredding process. Also, by operating the shredder at an appropriate rotational speed, it is possible to obtain shreds while minimizing the amount of polymer dust, which is advantageous in the subsequent mixing step.

The shreds that are obtained by shredding the pieces of polymer foam material are then collected into a mixing vessel and mixed 405 with an adhesive. In order to make the mixing process as efficient as possible, the mixing vessel is advantageously in the form of a rotating cylinder that is tilted with respect to the vertical direction. The adhesive, which preferably is in liquid form, may advantageously comprise isocyanate. Wetting of the shreds during this mixing step is optimized when the shreds obtained from the shredder contains a minimum amount of dust.

The mixture of shreds of polymer foam material and adhesive is then provided into a pressure moulding system where the mixture is pressure moulded 407. The pressure moulding system may be of the type comprising a mould bottom into which the mixture is poured from above, whereupon a mould top is pressed down onto the mould bottom. While in the pressure moulding system, the mixture of shreds of polymer foam material and adhesive cure into blocks of cured pressure moulded polymer foam material.

The curing requires the presence of water, which means that it is desirable to introduce water into the mould during curing. By adding liquid water, a cycle time of typically 1 hour may be obtained. However, by introducing pressurized steam (i.e. water at high pressure and high temperature) into the mould, the cycle time may be significantly lower. In fact, by introducing steam into the mould, a cycle time of around 10 minutes may be obtained.

The cured block of pressure moulded pieces of polymer foam material is then extracted from the pressure moulding system. Some of the extracted blocks are then cut 409 into sheets. This cutting step may be performed by means of any appropriate cutting arrangement configured for polymer foam material.

The sheets are then perforated 411 whereby the sheets obtain a perforation pattern as exemplified herein. This perforation step may be performed by means of any appropriate perforation arrangement configured for perforating polymer foam material.

Some of the extracted blocks are, instead of being cut into sheets, then cut 413 into frame structures such as the frame structures exemplified herein. This cutting step may be performed by means of any appropriate cutting arrangement configured for polymer foam material.

Frame structures and sheets are then attached 415 to each other and thereby resulting in sheet assemblies such as the sheet assembly 50 described above. This attachment step may be performed by means of glueing the components together, using an appropriately selected glue suitable for polymer foam material.

As illustrated in **figure 5****,** sheet assemblies resulting from the manufacturing method described in figure 4 may then be further assembled 501 into sound absorbing panel assemblies such as the sound absorbing panel assembly 10 described above. This assembly step may be performed by means of glueing at least a first sheet assembly and a second sheet assembly together, using an appropriately selected glue suitable for polymer foam material.

## Claims

1. A sound absorbing panel assembly (10) comprising:
- a first sheet (11) and a second sheet (12),
- a first frame structure (21) and a second frame structure (22), wherein:
- each sheet (11, 12) is provided with a plurality of backside-to-front side through-going perforations (31) arranged in a pattern covering at least a major part of the area of the backside and front side of each sheet (11, 12),
- the first frame structure (21) is arranged on the backside of the first sheet (11),
- the second frame structure (22) is arranged on the backside of the second sheet (12),
- the first sheet (11) and the second sheet (12) are arranged in a sandwich arrangement in relation to each other such that the first frame structure (21) is attached to the front side of the second sheet (12) and an air gap (13) is present between the sheets (11, 12), said panel assembly being **characterized in that**
each sheet (11, 12) comprises a polymer foam material.

2. The panel assembly (10) of claim 1, where the first frame structure (21) and the second frame structure (22) comprises said polymer foam material.

3. The panel assembly (10) of any of claims 1-2, wherein the polymer foam material comprises aggregated shreds of polymer foam.

4. The panel assembly (10) of claim 3, where the shreds have a size in the range 3-20 mm after shredding.

5. The panel assembly (10) of any of claims 1-4, wherein the thickness (Z2) of the first sheet (11) plus the thickness (Z3) of the first frame structure (21) is in the interval 45 mm to 55 mm.

6. The panel assembly (10) of any of claims 1-5, wherein the thickness (Z4) of the second sheet (12) plus the thickness (Z5) of the second frame structure (22) is in the interval 45 mm to 55 mm.

7. The panel assembly (10) of any of claims 1-6, wherein the perforations (31) are arranged in a matrix pattern of rows and columns.

8. The panel assembly (10) of claim 7, wherein a distance (C-C) between adjacent perforations (31) is in any of the intervals: 5-50 mm, 10-30 mm, 15-25 mm and 19-21 mm.

9. The panel assembly (10) of any of claims 1-6, wherein the perforations (31) are through-going holes having a diameter (ø) in any of the intervals 0.5-10 mm, 1-5 mm and 1.5-2.5 mm.

10. A method for manufacturing a sound absorbing panel assembly (10) according to claim 1, comprising:
- manufacturing a plurality of sheet assemblies (50) by:
- obtaining (401) pieces of polymer foam material,
- shredding (403) the pieces of polymer foam material into shreds of polymer foam material,
- mixing (405) the shreds of polymer foam material with an adhesive into a mixture of shreds of polymer foam material and adhesive,
- pressure moulding (407) the mixture of shreds of polymer foam material and adhesive into cured blocks of pressure moulded pieces of polymer foam material,
- cutting (409) the cured blocks of pressure moulded pieces of polymer foam material into sheets of polymer foam material,
- perforating (411) at least one sheet of polymer foam material whereby the sheet of polymer foam material obtains a perforation pattern,
- cutting (413) at least one sheet of polymer foam material into at least one polymer foam frame structure, and
- attaching (415) a polymer foam frame structure obtained in the cutting (413) step to a perforated sheet of polymer foam material obtained in the perforating (411) step into a sheet assembly (50), and
- assembling (501) at least a first sheet assembly (50) and a second sheet assembly (50) together into the sound absorbing panel assembly (10).

## Patentansprüche

1. Schallabsorbierende Paneelanordnung (10), umfassend:
- eine erste Platte (11) und eine zweite Platte (12),
- eine erste Rahmenkonstruktion (21) und eine zweite Rahmenkonstruktion (22),
wobei:
- jede Platte (11, 12) mit einer Vielzahl von durch die Rückseite zur Vorderseite durchgehenden Perforationen (31) bereitgestellt ist, die in einem Muster angeordnet sind, das mindestens einen Großteil der Fläche der Rückseite und der Vorderseite jeder Platte (11, 12) bedeckt,
- die erste Rahmenkonstruktion (21) auf der Rückseite der ersten Platte (11) angeordnet ist,
- die zweite Rahmenkonstruktion (22) auf der Rückseite der zweiten Platte (12) angeordnet ist,
- die erste Platte (11) und die zweite Platte (12) in einer Sandwichanordnung in Bezug zueinander derart angeordnet sind, dass die erste Rahmenkonstruktion (21) an der Vorderseite der zweiten Platte (12) befestigt ist und ein Luftspalt (13) zwischen den Platten (11, 12) vorhanden ist, wobei die Paneelanordnung **dadurch gekennzeichnet ist, dass** jede Platte (11, 12) ein Polymerschaummaterial umfasst.

2. Paneelanordnung (10) nach Anspruch 1, wobei die erste Rahmenkonstruktion (21) und die zweite Rahmenkonstruktion (22) das Polymerschaummaterial umfassen.

3. Paneelanordnung (10) nach einem der Ansprüche 1 bis 2, wobei das Polymerschaummaterial aggregierte Schnipsel aus Polymerschaum umfasst.

4. Die Paneelanordnung (10) nach Anspruch 3, wobei die Schnipsel nach dem Zerkleinern eine Größe im Bereich von 3 bis 20 mm aufweisen.

5. Paneelanordnung (10) nach einem der Ansprüche 1 bis 4, wobei die Dicke (Z2) der ersten Platte (11) plus die Dicke (Z3) der ersten Rahmenkonstruktion (21) im Intervall von 45 mm bis 55 mm liegt.

6. Paneelanordnung (10) nach einem der Ansprüche 1 bis 5, wobei die Dicke (Z4) der zweiten Platte (12) plus die Dicke (Z5) der zweiten Rahmenkonstruktion (22) im Intervall von 45 mm bis 55 mm liegt.

7. Paneelanordnung (10) nach einem der Ansprüche 1 bis 6, wobei die Perforationen (31) in einem Matrixmuster aus Reihen und Spalten angeordnet sind.

8. Paneelanordnung (10) nach Anspruch 7, wobei eine Distanz (C-C) zwischen benachbarten Perforationen (31) in einem der folgenden Intervalle liegt: 5-50 mm, 10-30 mm, 15-25 mm und 19-21 mm.

9. Paneelanordnung (10) nach einem der Ansprüche 1 bis 6, wobei die Perforationen (31) Durchgangslöcher aufweisen, die einen Durchmesser (ø) in einem der Intervalle 0,5-10 mm, 1-5 mm und 1,5-2,5 mm aufweisen.

10. Verfahren zum Herstellen einer schallabsorbierenden Paneelanordnung (10) nach Anspruch 1, umfassend:
- Herstellen einer Vielzahl von Plattenanordnungen (50) durch:
- Erlangen (401) von Stücken aus Polymerschaummaterial,
- Zerkleinern (403) der Stücke aus Polymerschaummaterial in Schnipsel aus Polymerschaummaterial,
- Mischen (405) der Schnipsel aus Polymerschaummaterial mit einem Klebstoff zu einer Mischung aus Schnipseln aus Polymerschaummaterial und Klebstoff,
- Druckformen (407) der Mischung aus Schnipseln aus Polymerschaummaterial und Klebstoff zu ausgehärteten Blöcken aus druckgeformten Stücken aus Polymerschaummaterial,
- Schneiden (409) der ausgehärteten Blöcke aus druckgeformten Stücken aus Polymerschaummaterial in Platten aus Polymerschaummaterial,
- Perforieren (411) mindestens einer Platte aus Polymerschaummaterial, wobei die Platte aus Polymerschaummaterial ein Perforationsmuster erlangt,
- Schneiden (413) mindestens einer Platte aus Polymerschaummaterial in mindestens eine Polymerschaumrahmenkonstruktion, und
- Anbringen (415) einer beim Schneiden (413) erlangten Polymerschaumrahmenkonstruktion an einer beim Perforieren (411) erlangten perforierten Platte aus Polymerschaummaterial zu einer Plattenanordnung (50), und
- Zusammenfügen (501) von mindestens einer ersten Plattenanordnung (50) und einer zweiten Plattenanordnung (50) zur schallabsorbierenden Paneelanordnung (10).

## Revendications

1. Ensemble de panneau d'absorption sonore (10) comprenant :
- une première plaque (11) et une seconde plaque (12),
- une première structure de cadre (21) et une seconde structure de cadre (22),
dans lequel :
- chaque plaque (11, 12) est pourvue d'une pluralité de perforations traversantes (31) allant de la face arrière à la face avant, disposées selon un motif couvrant au moins une majeure partie de la surface de la face arrière et de la face avant de chaque plaque (11, 12),
- la première structure de cadre (21) est disposée sur la face arrière de la première plaque (11),
- la seconde structure de cadre (22) est disposée sur la face arrière de la seconde plaque (12),
- la première plaque (11) et la seconde plaque (12) sont disposées en couches superposées l'une par rapport à l'autre de telle sorte que la première structure de cadre (21) est fixée sur la face avant de la seconde plaque (12) et un espace d'air (13) est présent entre les plaques (11, 12), ledit ensemble de panneau étant **caractérisé en ce que** chaque plaque (11, 12) comprend un matériau en mousse polymère.

2. Ensemble de panneau (10) selon la revendication 1, dans lequel la première structure de cadre (21) et la seconde structure de cadre (22) comprennent ledit matériau en mousse polymère.

3. Ensemble de panneau (10) selon l'une quelconque des revendications 1 à 2, dans lequel le matériau en mousse polymère comprend des lambeaux agrégés de mousse polymère.

4. Ensemble de panneau (10) selon la revendication 3, dans lequel les lambeaux présentent une taille comprise entre 3 et 20 mm après déchiquetage.

5. Ensemble de panneau (10) selon l'une quelconque des revendications 1 à 4, dans lequel l'épaisseur (Z2) de la première plaque (11) additionnée à l'épaisseur (Z3) de la première structure de cadre (21) est comprise dans l'intervalle de 45 mm à 55 mm.

6. Ensemble de panneau (10) selon l'une quelconque des revendications 1 à 5, dans lequel l'épaisseur (Z4) de la seconde plaque (12) additionnée à l'épaisseur (Z5) de la seconde structure de cadre (22) est comprise dans l'intervalle de 45 mm à 55 mm.

7. Ensemble de panneau (10) selon l'une quelconque des revendications 1 à 6, dans lequel les perforations (31) sont disposées selon un motif matriciel de rangées et de colonnes.

8. Ensemble de panneau (10) selon la revendication 7, dans lequel une distance (C-C) entre des perforations adjacentes (31) est comprise dans l'un quelconque des intervalles : de 5 à 50 mm, de 10 à 30 mm, de 15 à 25 mm et de 19 à 21 mm.

9. Ensemble de panneau (10) selon l'une quelconque des revendications 1 à 6, dans lequel les perforations (31) sont des trous traversants présentant un diamètre (ø) compris dans l'un quelconque des intervalles de 0,5 à 10 mm, de 1 à 5 mm et de 1,5 à 2,5 mm.

10. Procédé de fabrication d'un ensemble de panneau d'absorption sonore (10) selon la revendication 1, comprenant :
- la fabrication d'une pluralité d'assemblages de plaques (50) par :
- l'obtention (401) de morceaux de matériau en mousse polymère,
- le déchiquetage (403) des morceaux de matériau en mousse polymère en lambeaux de matériau en mousse polymère,
- le mélange (405) des lambeaux de matériau en mousse polymère avec un adhésif dans un mélange de lambeaux de matériau en mousse polymère et d'adhésif,
- le moulage sous pression (407) du mélange de lambeaux de matériau en mousse polymère et d'adhésif en blocs durcis de pièces moulées sous pression de matériau en mousse polymère,
- la découpe (409) des blocs durcis de pièces moulées sous pression de matériau en mousse polymère en plaques de matériau en mousse polymère,
- la perforation (411) d'au moins une plaque de matériau en mousse polymère, moyennant quoi la plaque de matériau en mousse polymère acquiert un motif de perforation,
- la découpe (413) d'au moins une plaque de matériau en mousse polymère en au moins une structure de cadre en mousse polymère, et
- la fixation (415) d'une structure de cadre en mousse polymère obtenue lors de l'étape de découpe (413) à une plaque perforée de matériau en mousse polymère obtenue lors de l'étape de perforation (411) pour former un assemblage de plaques (50), et
- l'assemblage (501) d'au moins un premier assemblage de plaques (50) et d'un second assemblage de plaques (50) ensemble dans l'ensemble de panneau d'absorption sonore (10).
